# EUROPÄISCHE PATENTSCHRIFT

(11) **EP 2 494 862 B1**
(45) Veröffentlichungstag und Bekanntmachung des Hinweises auf die Patenterteilung: **28.08.2013**
(21) Anmeldenummer: 11188616.4
(22) Anmeldetag: 10.11.2011
(51) Int. Cl.: A01C 5/06, A01C 7/20

(54) **Säschar**
Seed drill coulter
Soc de semoir

(30) Priorität: 04.03.2011 DE 102011013000
(43) Veröffentlichungstag der Anmeldung: 05.09.2012
(73) Patentinhaber: Kverneland AS, 4355 Kvernaland (NO)
(72) Erfinder: Budde, Michael, 59609 Anröchte (NO)
(74) Vertreter: Schweiger, Johannes

(56) Entgegenhaltungen:
- EP-A1- 1 529 432
- WO-A1-01/54484
- WO-A1-96/24239
- CA-A1- 2 587 130
- DE-B3-102007 053 001

## Beschreibung

Die vorliegende Erfindung betrifft ein Säschar gemäß Patentanspruch 1 sowie ein Sägerät gemäß Patentanspruch 8.

Solche Sägeräte mit entlang der Säbreite gleichmäßig verteilten Säscharen zur Einbringung von Saatgut und/oder Dünger in einen Ackerboden sollen eine gleichmäßige Sätiefe sowie nach Einbringung des Saatguts/Düngers ein für jeweilige Saatbedingungen optimales Andrücken/Verschließen der Säfurche gewährleisten. Hierbei spielt nicht nur das Saatgut/der Dünger eine wesentliche Rolle, sondern auch die Bodenbeschaffenheit, wie beispielsweise die Feuchtigkeit des Bodens und vor allen Dingen im oder auf dem Boden vorhandene Hindernisse wie Steine. Ein solches Sägerät ist aus CA 2587130 bekannt.

Aufgabe der vorliegende Erfindung ist es daher, ein Säschar beziehungsweise ein Sägerät anzugeben, das einerseits konstruktiv einfach ist und andererseits für eine optimale Einbringung des Saatguts und/oder Düngers in den Boden sorgt.

Diese Aufgabe wird mit den Merkmalen der Patentansprüche 1 und 8 erfüllt. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart oder in beliebiger Kombination beanspruchbar sein.

Der Erfindung liegt der Gedanke zugrunde, durch gelenkige Verbindung sowohl des Scharhalters als auch des Andruckarms und Vorsehen einer, insbesondere einzigen, Federung zwischen dem Andruckarm und dem Scharrahmen eine optimale Kräfteverteilung und/oder Drehmomentverteilung zwischen dem Scharrahmen, dem Säschar und der Andruckrolle zu schaffen. Die Position der Federbefestigung am Andruckarm ist dabei so gewählt, dass diese konstruktiv einfach, insbesondere als Haken, ausgebildet ist und somit äußerst wartungsarm oder sogar wartungsfrei ist. Vorteilhaft kann es dabei sein, wenn die Federbefestigung entlang des Andruckarms, insbesondere entlang der Fahrtrichtung F, in einem Verstellbereich verstellbar ist. Die Verstellung kann auch durch verschiedene Federlängen oder ein Zwischenglied zwischen der Feder und der Federbefestigung, insbesondere in Form von einer Kette mit mehreren Kettengliedern, vorgesehen sein. Besonders vorteilhaft ist es erfindungsgemäß, wenn die Federbefestigung mit einer eine in Richtung des Ackerbodens gerichtete Zugkraftkomponente aufweisenden Zugkraft beaufschlagbar ist. Die Federung zur Anbringung an der Federbefestigung des Andruckarms erfolgt, insbesondere ausschließlich oder direkt, zwischen dem Andruckarm und dem Scharrahmen oder einer am Scharrahmen fixierten Federhalterung. Durch die Federung wird der Andruckarm mit einer zumindest teilweise zum Ackerboden gerichteten Kraft K₂ beaufschlagt. Dadurch dass der Andruckarm an dem Scharhalter gelenkig angebracht ist, wird auch der Scharhalter mit einer zumindest teilweise in Richtung des Bodens gerichteten Kraft K₁ beaufschlagt. Durch die Konstruktion wird mittels der Federung gleichzeitig die Sätiefe der Scharscheibe und die Andruckkraft der Andruckrolle eingestellt.

Mit anderen Worten dient die Federung der Erzeugung eines ersten Drehmoments M₁ an der ersten Schwenkachse und eines zweiten Drehmoments M₂ an der zweiten Schwenkachse. Dabei sind erfindungsgemäß insbesondere Begrenzungsmittel zur Begrenzung der Schwenkbewegung des Andruckarms um die zweite Schwenkachse in Richtung des Bodens vorgesehen. Hierdurch wird die Sätiefe eingestellt. Gleichzeitig kann die Andruckrolle beziehungsweise der Andruckarm bei Überfahren eines Hindernisses nach oben ausschwenken, ohne den Scharhalter und damit die Säscheibe mit anzuheben. Damit kann die Säscheibe unmittelbar nach Überfahren des Hindernisses in den Boden mit der durch die Federung vorgegebenen Sätiefe eindringen und das Saatgut in den Boden einbringen.

Gemäß einer vorteilhaften Ausführungsform der Erfindung ist vorgesehen, dass ein die zweite Schwenkachse bildendes und den Andruckarm mit dem Scharhalter verbindendes zweites Schwenkgelenk, insbesondere in Fahrtrichtung F vor der Federbefestigung, vorgesehen ist. Verbindungen durch Schwenkgelenke sind besonders einfach herstellbar und äußerst wartungsarm.

Soweit am Scharhalter ein, insbesondere verstellbarer, Andruckanschlag (Begrenzungsmittel) zur Begrenzung einer Schwenkbewegung der Andruckrolle in Richtung des Bodens vorgesehen ist, sind die Begrenzungsmittel konstruktiv besonders einfach und wartungsarm ausgebildet. Bei Vorsehen einer Verstellbarkeit erfüllen die Begrenzungsmittel eine weitere Funktion, nämlich die Einstellung einer Sätiefe beziehungsweise die Anpassung der auf den Boden wirkenden Scharkraft der Scharscheibe.

Erfindungsgemäß kann die Federung in vorteilhafter Ausgestaltung als Zugfeder, insbesondere Spiralfeder, ausgebildet sein. Hierdurch kann auf Federungsteile oberhalb des Scharhalters und/oder des Andruckarms und/oder des Scharrahmens verzichtet werden, wodurch das Einklappen der Säschare nach erfolgter Einbringung des Saatguts/Düngers in den Boden ermöglicht wird. Die erfindungsgemäße Konstruktion stellt daher eine besonders platzsparende und konstruktiv einfache, also auch gewichtssparende Lösung vor.

Somit ist es erfindungsgemäß denkbar, dass die Federung, insbesondere vollständig, unterhalb der ersten, insbesondere zusätzlich unterhalb der zweiten, Schwenkachse verläuft.

Gemäß einer weiteren vorteilhaften Ausführungsform der Erfindung ist vorgesehen, dass der Andruckanschlag in Fahrtrichtung F hinter der zweiten Schwenkachse angeordnet ist, insbesondere gebildet durch:
- ein, vorzugsweise zwei korrespondierende, Stellblech(e) mit einer Vielzahl von Stellaufnahmen und
- ein in den Stellaufnahmen fixierbares Anschlagelement.

Die Stellbleche können dabei neben der Verstellbarkeit des Andruckanschlags gleichzeitig eine optimale Seitenführung des Andruckanschlags und damit der Andruckrolle gewährleisten.

Soweit der Andruckarm gegenüber dem Scharhalter, insbesondere durch die Begrenzungsmittel, vorzugsweise den Andruckanschlag, arretierbar ist, weist das erfindungsgemäße Säschar eine zusätzliche Funktionsstellung auf, bei der die Andruckrolle nur gemeinsam mit dem Säschar schwenkbar ist und zwar um die erste Schwenkachse.

Erfindungsgemäß ist ein Sägerät mit einem Scharrahmen und mehreren, am Scharrahmen angebrachten und jeweils mit einer Federung zwischen dem Scharrahmen und dem Andruckarm des Säschars vorgesehen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine perspektivische Ansicht des erfindungsgemäßen Säschars,
- Figur 2: eine perspektivische Ansicht des Säschars in der in Figur 1 gezeigten Betriebsposition von der gegenüberliegenden Seite,
- Figur 3: eine perspektivische Ansicht des erfindungsgemäßen Säschars gemäß Figur 1 und 2 beim Überfahren eines Hindernisses und
- Figur 4: eine perspektivische Ansicht des erfindungsgemäßen Säschars in einer Arretierstellung der Begrenzungsmittel.

In den Figuren sind gleiche oder gleichwirkende Elemente mit den gleichen Bezugszeichen gekennzeichnet.

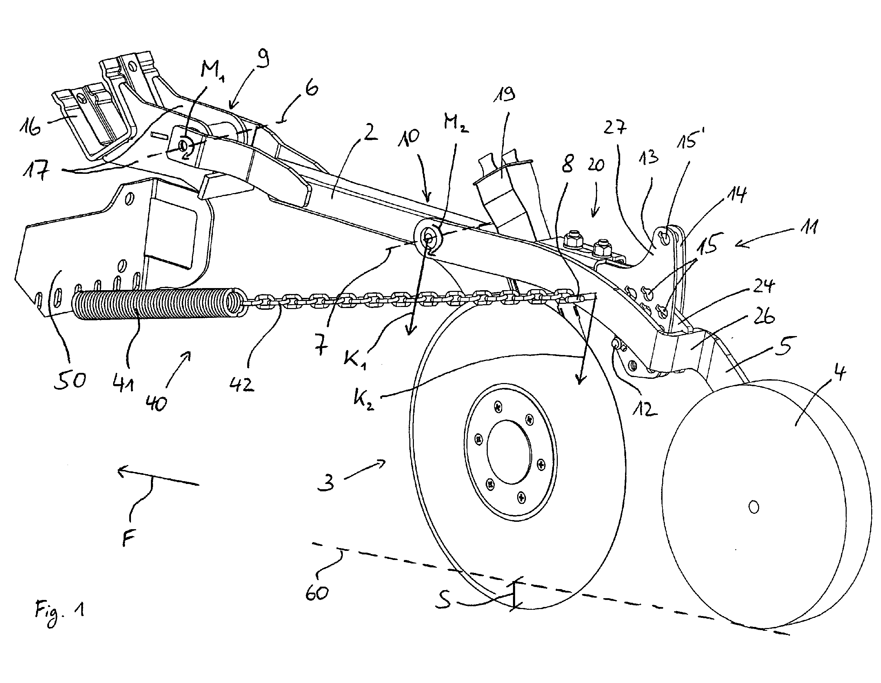

Figur 1 zeigt ein Säschar 1 zur Montage an einem nicht dargestellten Scharrahmen mittels eines den Scharrahmen aufnehmenden U-Profils 16. Das U-Profil 16 ist gegenüber dem Scharrahmen fixiert und weist zwei Fixierschenkel 17 auf, in welchem ein erstes Schwenkgelenk 9 gelagert ist, das einen Scharhalter 2 mit den Fixierschenkeln 17 und dem U-Profil 16 schwenkbar verbindet. An den Fixierschenkeln 17 ist unterhalb und quer zur Erstreckung der Fixierschenkel 17 ein Transportanschlag 18 vorgesehen, mittels dessen der Scharhalter 2 durch den Scharrahmen aus seiner in Figur 1 dargestellten Betriebsstellung nach oben geschwenkt werden kann. Die Schwenkbewegung kann insbesondere durch Rotation des Scharrahmens bewirkt werden. Eine Vorgewendestellung dient dem Wenden auf dem Vorgewende, wobei die an dem Scharrahmen montierten Säschare 1 so weit ausgehoben werden, dass die Säschare 1 knapp über einem Boden 60 angeordnet sind. Für einen Transport, insbesondere nach Straßenverkehrsordnung, sind die Säschare 1 in eine Transportstellung schwenkbar.

In der Betriebsstellung ist das Säschar 1 so ausgerichtet, dass eine am Scharhalter 2 angebrachte Scharscheibe 3 in einer definierten Sätiefe in einen Boden 60 eintaucht. In die durch die Scharscheibe 3 gebildete Säfurche im Boden 60 wird über ein Saatgutrohr 19 Saatgut oder Dünger in die Säfurche eingebracht, und zwar während der Fortbewegung in Fahrtrichtung F. Die Fortbewegung in Fahrtrichtung F erfolgt mittels einer nicht dargestellten Zugmaschine, die ein den Scharrahmen umfassendes Sägerät zieht. Das Sägerät weist an seinem Scharrahmen eine Vielzahl von in definierten Abständen nebeneinander angeordneten Säscharen 1 auf. In Fahrtrichtung F vor der Rotationsachse der Scharscheibe 3 ist an dem Scharhalter 2 ein zweites Schwenkgelenk 10 vorgesehen, in welchem ein Andruckarm 5 schwenkbar gelagert ist. An seinem freien Ende und in Fahrtrichtung F hinter der Scharscheibe 3 ist eine Andruckrolle 4 rotierbar angebracht. Die Andruckrolle 4 verläuft in Fahrtrichtung F etwa fluchtend hinter der Scharscheibe 3, um das in die Säfurche eingebrachte Saatgut anzudrücken und/oder die Säfurche zu verschließen.

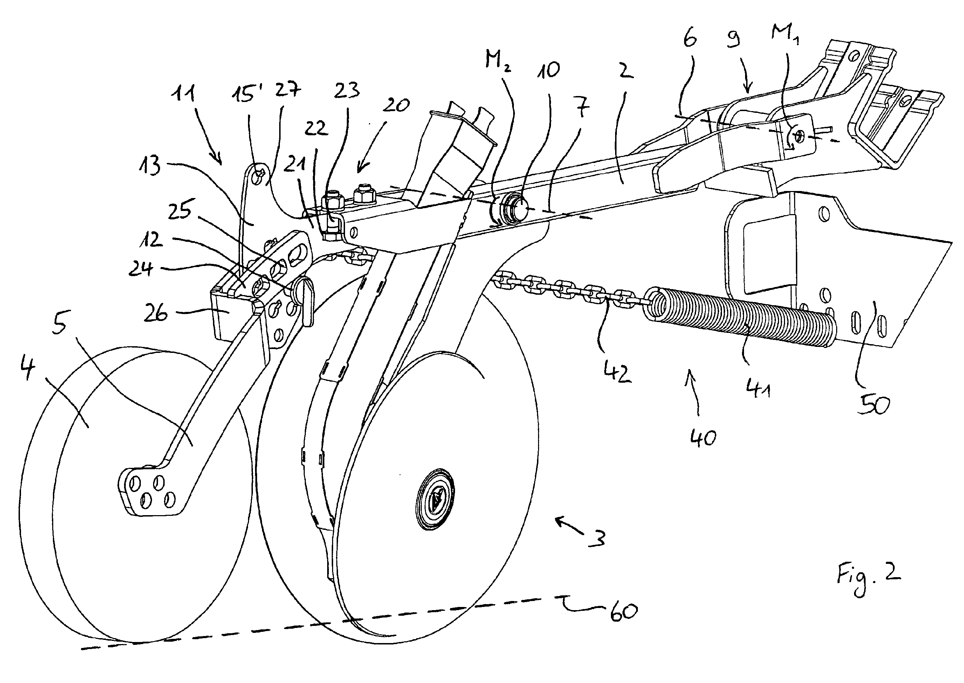

Während der Scharhalter 2 zumindest überwiegend als Hohlprofil gebildet ist, um die an der Scharscheibe 3 wirkenden Kräfte aufzunehmen, ist der Andruckarm 5 vorzugsweise als Blech ausgebildet, der seitlich am Scharhalter 2 angebracht ist, und zwar durch das zweite Schwenkgelenk 10. Hierdurch wird eine platz- und gewichtssparende Konstruktion erreicht. In Figur 2 ist zu erkennen, dass die Scharscheibe 3 im gezeigten Ausführungsbeispiel als Scharscheibenpaar ausgebildet ist.

Seitlich am Andruckarm 5, insbesondere in Fahrtrichtung F hinter der Rotationsachse der Scharscheibe 3 ist eine Federbefestigung 8 in Form eines Hakens angebracht, insbesondere angeschweißt. Die Federbefestigung 8 ist an derselben Seite wie der Andruckarm 5 an dem Scharhalter 2 angeordnet.

In Fahrtrichtung F hinter der Rotationsachse der Scharscheibe 3, insbesondere überwiegend, vorzugsweise vollständig, in Fahrtrichtung F hinter der Federbefestigung 8, sind Begrenzungsmittel in Form eines Andruckanschlags 11 vorgesehen. Der Andruckanschlag 1 1 beziehungsweise die Begrenzungsmittel bestehen aus einem Anschlagelement 12, das als Stift mit einer Rastnase ausgebildet ist und zwei Stellblechen 13, 14 mit korrespondierenden Stellaufnahmen 15, die auf den Stellflächen jeweils fluchtend zueinander verteilt sind.

Die Stellbleche 13, 14 sind an dem freien Ende des Scharhalters 2, also gegenüberliegend zum ersten Schwenkgelenk 9, fixiert, insbesondere durch eine quer zur Fahrtrichtung F wirkende Schraubverbindung 20 (siehe insbesondere Figur 2, Stellblech 14 weggelassen).

Die Stellbleche 13, 14 sind derart fixiert, indem korrespondierende Fixierabschnitte 21 der Stellbleche 13, 14 durch die Schraubverbindung 20 an dem Scharhalter 2 fixiert werden. Dabei dienen Kopfaufnahmen 22 zur Aufnahme von Schraubenköpfen und als Gegenlager für die Schraubverbindung 20. Schraubenschäfte 23 der Schraubverbindung 20 dienen als Abstandhalter für die Stellbleche 13, 14.

Gemäß einer alternativen, bevorzugten Ausführungsform wirkt die Schraubverbindung parallel zur zweiten Schwenkachse 7. Hierdurch können die auf den Andruckarm 5 wirkenden Querkräfte besser aufgenommen werden.

Es ist erfindungsgemäß mit Vorteil denkbar, die Stellbleche einteilig auszubilden, insbesondere im Querschnitt U-förmig oder durch, vorzugsweise zwischen den Stellblechen verschweißte, Stege verbunden.

Zwischen den durch die Schraubenschäfte 23 beabstandeten Stellblechen 13, 14 ist ein Fixierblech 24 mit mehreren Fixieröffnungen 25 vorgesehen.

Das Anschlagelement 12 ist durch korrespondierende Stellaufnahmen 15 steckbar und mittels der Rastnase des Anschlagelements 12 verriegelbar. Hierzu ist an dem Anschlagelement ein Griff vorgesehen. Gemäß einer bevorzugten Ausführungsform ist das Anschlagelement als Bolzen mit einer Bolzensicherung, insbesondere in Form eines am Bolzen sicherbaren Splint, ausgeführt. In diesem Fall kann auf einen Griff verzichtet werden, da keine Drehung des Bolzens erforderlich ist.

In der in Figur 1 und 2 gezeigten Betriebsstellung des Säschars 1 ist das Anschlagelement 12 in einem unten, also in Richtung des Bodens 60, angeordneten Bereich der Stellbleche 13, 14 in einer von mehreren ein Stellraster bildenden Stellaufnahmen 15 fixiert.Der Andruckarm 5 ist in der gezeigten Stellung weiter nach unten schwenkbar als bei Einrastung in einer weiter oben im Stellraster angeordneten Stellaufnahme 15. Hierdurch ist eine Sätiefe S des Säschars 1 im Boden 60 einstellbar.

Um einen "Überschlag" des Andruckarms 5 zu verhindern, ist erfindungsgemäß vorgesehen, dass die Begrenzungsmittel eine Bewegung des Andruckarms 5 vom Boden 60 weg beziehungsweise entgegen des zweiten Drehmoments M2 begrenzend ausgebildet sind, insbesondere durch eine Begrenzungsaufnahme 15' am oberen Ende des Andruckanschlags 11 beziehungsweise der Stellbleche 13, 14. Hierzu können die Stellbleche 13, 14 eine von dem Stellraster beabstandete Nase 27 aufweisen. Die Begrenzung erfolgt wie bei den Stellaufnahmen 15 durch ein Anschlagelement.

Durch die Begrenzungsaufnahme 15' ist eine weitere Betriebsstellung realisierbar, so dass das Einsatzspektrum des erfindungsgemäßen Säschars 1 weiter erhöht wird. Die Andruckrolle 4 kann außer Betrieb gesetzt werden, indem das Anschlagelement nicht nur durch die Begrenzungsaufnahme 15', sondern auch durch eine der entsprechend positionierten Fixieröffnungen 25 gesteckt wird. Damit kann die Andruckrolle 4 in der höchsten Stellung an dem Stellraster fixiert werden, so dass eine Schwenkbewegung um die zweite Schwenkachse 7 verhindert wird.

Das Fixierblech 24 ist an einem in Fahrtrichtung F hinter der Federbefestigung 8 quer verlaufenden Fixierabschnitt 26 des Andruckarms 5 fixiert. Hinter dem Fixierabschnitt 26 verläuft der Andruckarm 5 weiter entgegen der Fahrtrichtung F, wodurch die Andruckrolle 4 an der gleichen Seite wie die Federbefestigung 8 am Andruckarm 5 anbringbar ist.

Das Säschar 1 weist somit eine erste Schwenkachse 6 im ersten Schwenkgelenk 9 und eine zweite Schwenkachse 7 im zweiten Schwenkgelenk 10 auf. Der Scharhalter 2 ist um die erste Schwenkachse 6 schwenkbar. Der Andruckarm 5 ist um die zweite Schwenkachse 7 und indirekt (über den Scharhalter 2) und/oder gleichzeitig um die erste Schwenkachse 6 schwenkbar.

In Verbindung mit einer an der Federbefestigung 8, also am Andruckarm 5 angeschlagenen Federung 40 ergibt sich folgende Kinematik. Die Federung 40 weist eine Spiralfeder 41 und ein Stellglied 42 auf, wobei das Stellglied 42 als Kette ausgebildet ist, deren eines Ende an der Federbefestigung 8 eingehakt wird. Das andere Ende wird an der Spiralfeder 41 befestigt, die wiederum mit ihrem gegenüberliegenden Ende an einer Federhalterung 50 in einer Federaufnahme der Federhalterung 50 eingehakt wird. Die Federhalterung 50 ist am Scharrahmen fixiert, und zwar unterhalb des Scharrahmens beziehungsweise unterhalb des U-Profils 16 beziehungsweise unterhalb des ersten Schwenkgelenks 9.

Somit bewirkt eine Zugkraft der Federung 40 an der Federbefestigung 8 zunächst ein Drehmoment M₂ in dem zweiten Schwenkgelenk 10. Sobald die Schwenkbewegung des Andruckarms 5 um das zweite Schwenkgelenk 10 durch die Begrenzungsmittel gestoppt wird, bewirkt die Federung 40 ein Drehmoment M₁ an dem ersten Schwenkgelenk 9.

Durch die Zugkraft der Federung 40 wird folglich gleichzeitig die Andruckrolle 4 und die Scharscheibe 3 in Richtung des Bodens 60 gedrückt. An der Federbefestigung 8 wirkt eine Kraftkomponente K₂ in Richtung des Bodens 60 und durch die Auflage der Andruckrolle 4 am Boden 60 sowie die Begrenzung des Andruckarms 5 durch die Begrenzungsmittel wirkt eine Kraftkomponente K₁ am zweiten Schwenkgelenk 10 in Richtung des Bodens, so dass auch die am Scharhalter 2 angebrachte Scharscheibe 3 in Richtung des Bodens 60 gedrückt wird.

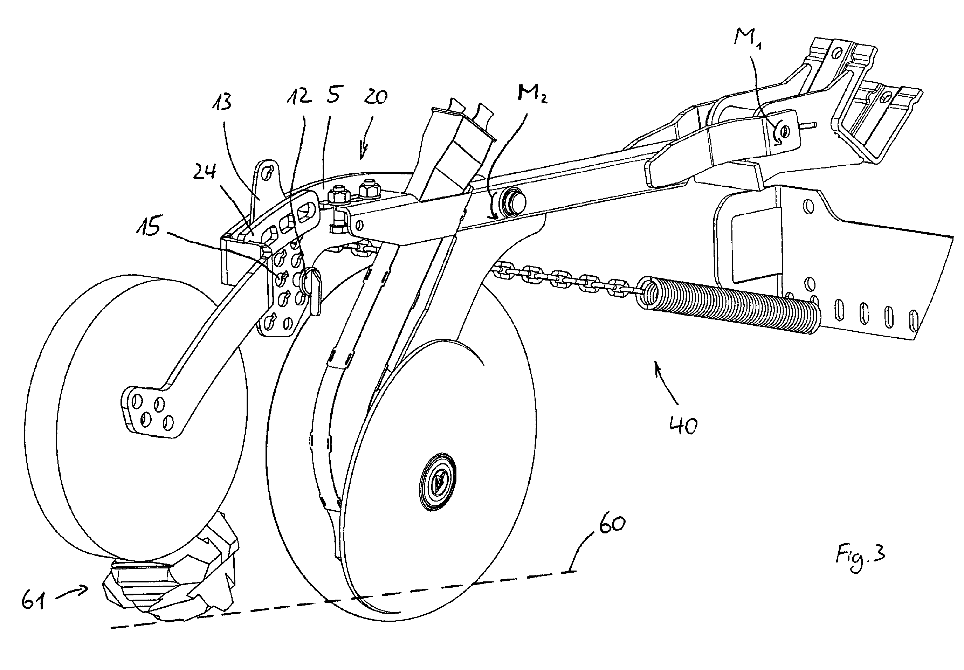

Der besondere Vorteil der Erfindung zeigt sich in der Abbildung gemäß Figur 3 beim Überfahren eines Hindernisses 61 auf dem Boden 60. Denn nach Überfahren des Hindernisses mit der Scharscheibe 3, wobei die Scharscheibe 3 durch Schwenkbewegung um das erste Schwenkgelenk 9 entgegen des Drehmoments M₁ zusammen mit dem durch die Begrenzungsmittel an einer weiteren Schwenkbewegung nach unten gehinderten Andruckrolle 4 angehoben wurde, kann die Scharscheibe 3 unmittelbar wieder in ihre Betriebsposition gemäß Figur 3 zurückkehren und die Einbringung von Saatgut in die Säfurche fortsetzen. Die Andruckrolle 4 kann nämlich um das zweite Schwenkgelenk 10 rotieren und nach oben ausgelenkt werden, und zwar entgegen der Wirkung des Drehmoments M₂. Somit ist die Aussaat nur während die Scharscheibe 3 am Hindernis 61 ist, unterbrochen.

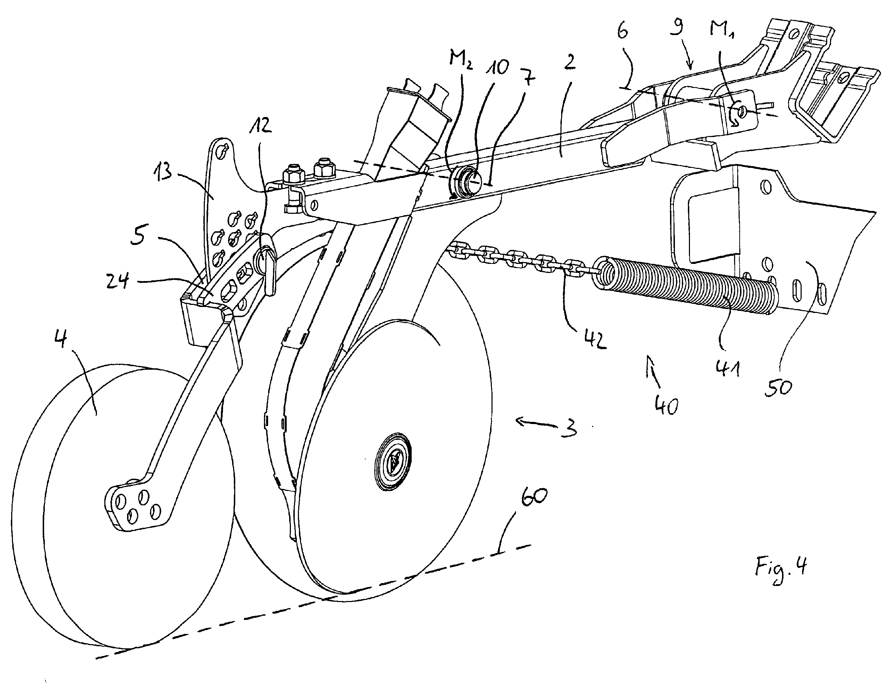

Die Flexibilität des erfindungsgemäßen Säschars 1 wird durch die Betriebsstellung gemäß Figur 4 deutlich, denn in dieser Betriebsstellung ist der Andruckarm 5 gegenüber dem Scharhalter 2 fixiert und nicht an dem zweiten Schwenkgelenk 10 schwenkbar. Hierdurch wird das Anschlagelement 12 nicht nur durch korrespondierende Stellaufnahmen 15, sondern auch durch eine der Fixieröffnungen 25 des am Andruckarm 5 fixierten Fixierblechs 24 gesteckt. Somit kann der Andruckarm 5 bei Überfahren eines Hindernisses nicht alleine nach oben ausschwenken, so dass die Scharscheibe 3 nicht unmittelbar nach Überfahren des Hindernisses nach unten ausschwenken kann. Diese Betriebsstellung kann insbesondere bei sehr guten Böden ohne Steine zum Einsatz kommen.

### Bezugszeich en liste

- 1: Säschar
- 2: Scharhalter
- 3: Scharscheibe
- 4: Andruckrolle
- 5: Andruckarm
- 6: erste Schwenkachse
- 7: zweite Schwenkachse
- 8: Federbefestigung
- 9: erstes Schwenkgelenk
- 10: zweites Schwenkgelenk
- 11: Andruckanschlag
- 12: Anschlagelement
- 13: Stellblech
- 14: Stellblech
- 15: Stellaufnahmen
- 15': Begrenzungsaufnahme
- 16: U-Profil
- 17: Fixierschenkel
- 18: Transportanschlag
- 19: Saatgutrohr
- 20: Schraubverbindung
- 21: Fixierabschnitte
- 22: Kopfaufnahmen
- 23: Schraubenschäfte
- 24: Fixierblech
- 25: Fixieröffnungen
- 26: Fixierabschnitt
- 27: Nase
- 40: Federung
- 41: Spiralfeder
- 42: Stellglied
- 50: Federhalterung
- 60: Boden
- 61: Hindernis
- M₁: Drehmoment
- M₂: Drehmoment
- K₁: Federkraftkomponente
- K₂: Federkraftkomponente
- F: Fahrtrichtung
- S: Sätiefe

## Patentansprüche

1. Säschar mit
- einer Scharscheibe (3) zur Einbringung von Saatgut und/oder Dünger in einen Boden (60) entlang einer Fahrtrichtung F,
- einem an einer ersten Schwenkachse (6) schwenkbaren Scharhalter (2) zur schwenkbaren Halterung und Anbringung der Scharscheibe (3) an einem Scharrahmen,
- einer in Fahrtrichtung F hinter der Scharscheibe (3) angeordneten Andruckrolle (4),
- einem an einer zweiten Schwenkachse (7) schwenkbaren Andruckarm (5) zur Aufnahme der Andruckrolle (4) an dessen freiem Ende und
- einer am Andruckarm (5) angebrachten Federbefestigung (8) zur Anbringung einer Federung (40) zwischen dem Andruckarm (5) und dem Scharrahmen zur Erzeugung eines ersten Drehmoments (M₁) an der ersten Schwenkachse (6) und eines zweiten Drehmoments (M₂) an der zweiten Schwenkachse (7).

2. Säschar nach Anspruch 1, bei dem ein die zweite Schwenkachse (7) bildendes und den Andruckarm (5) mit dem Scharhalter (2) verbindendes zweites Schwenkgelenk (10), insbesondere in Fahrtrichtung F vor der Federbefestigung (8), vorgesehen ist.

3. Säschar nach einem der vorhergehenden Ansprüche, bei dem am Scharhalter (2) ein, insbesondere verstellbarer, Andruckanschlag (11) zur Begrenzung einer Schwenkbewegung der Andruckrolle (4) in Richtung des Bodens (60) vorgesehen ist.

4. Säschar nach einem der vorhergehenden Ansprüche, bei dem die Federung (40) als Zugfeder, insbesondere Spiralfeder (41), ausgebildet ist.

5. Säschar nach einem der vorhergehenden Ansprüche, bei der die Federung (40) unterhalb der ersten und zweiten Schwenkachse (6, 7) verläuft.

6. Säschar nach einem der vorhergehenden Ansprüche, bei dem Begrenzungsmittel, insbesondere der Andruckanschlag (11), in Fahrtrichtung F hinter der zweiten Schwenkachse (7) angeordnet sind, insbesondere gebildet durch:
- ein, vorzugsweise zwei korrespondierende, Stellblech(e) (13, 14) mit einer Vielzahl von Stellaufnahmen (15) und
- ein in den Stellaufnahmen (15) fixierbares Anschlagelement (12).

7. Säschar nach einem der vorhergehenden Ansprüche, bei dem der Andruckarm (5) gegenüber dem Scharhalter (2), insbesondere durch die Begrenzungsmittel, vorzugsweise den Andruckanschlag (11) arretierbar ist.

8. Sägerät mit einem Särahmen mit zumindest einem aufgenommenen Säschar (1) nach einem der vorhergehenden Ansprüche und mit einer Federhalterung (50) sowie einer zwischen dem Andruckarm (5) und der Federhalterung (50) wirkenden Federung (40).

## Claims

1. A sowing coulter with
- a coulter disc (3) for the introduction of seed and/or fertilizer into a ground (60) along a direction of travel F,
- a coulter holder (2), swivellable on a first swivel axis (6), for the swivellable holding and mounting of the coulter disc (3) on a coulter frame,
- a pressure roller (4) arranged behind the coulter disc (3) in the direction of travel F,
- a pressure arm (5), swivellable on a second swivel axis (7), to receive the pressure roller (4) at its free end and
- a spring fastening (8), mounted on the pressure arm (5), for the mounting of a spring system (40) between the pressure arm (5) and the coulter frame for the generation of a first torque (M₁) on the first swivel axis (6) and of a second torque (M₂) on the second swivel axis (7).

2. The sowing coulter according to Claim 1, in which a second swivel joint (10) forming the second swivel axis (7) and connecting the pressure arm (5) with the coulter holder (2), is provided in particular in front of the spring fastening (8) in the direction of travel F.

3. The sowing coulter according to one of the preceding claims, in which an, in particular, adjustable pressure stop (11) is provided on the coulter holder (2) for delimiting a swivelling movement of the pressure roller (4) in the direction of the ground (60).

4. The sowing coulter according to one of the preceding claims, in which the spring system (40) is constructed as a tension spring, in particular a spiral spring (41).

5. The sowing coulter according to one of the preceding claims, in which the spring system (40) runs beneath the first and second swivel axis (6, 7).

6. The sowing coulter according to one of the preceding claims, in which delimiting means, in particular the pressure stop (11), are arranged behind the second swivel axis (7) in the direction of travel F, in particular formed by:
- one, preferably two corresponding, adjustment plate(s) (13, 14) with a plurality of adjustment mounts (15) and
- a stop element (12) able to be fixed in the adjustment mounts (15).

7. The slowing coulter according to one of the preceding claims, in which the pressure arm (5) is able to be arrested with respect to the coulter holder (2), in particular by the delimiting means, preferably the pressure stop (11).

8. A sowing apparatus with a sowing frame with at least one mounted sowing coulter (1) according to one of the preceding claims and with a spring holder (50) and with a spring system (40) acting between the pressure arm (5) and the spring holder (50).

## Revendications

1. Soc de semoir comportant
- un disque de soc (3) pour semer des semences et/ou des engrais dans un sol (60) le long d'une direction de conduite F,
- un support de soc (2) pivotable autour d'un premier axe de pivotement (6) à des fins de support et montage pivotant du disque de soc (3) sur un châssis de soc,
- un galet presseur (4) disposé derrière le disque de soc (3) dans la direction de conduite F,
- un bras presseur (5) pivotable autour d'un deuxième axe de pivotement (7) afin de recevoir des galets presseurs (4) à l'extrémité libre de celui-ci et
- une fixation à ressort (8) montée sur le bras presseur (5) à des fins de montage d'une suspension (40) entre le bras presseur (5) et le châssis de soc afin de générer un premier couple de rotation (M₁) sur le premier axe de pivotement (6) et un deuxième couple de rotation (M₂) sur le deuxième axe de pivotement (7).

2. Soc de semoir selon la revendication 1, dans lequel une deuxième articulation pivotante (10) formant le deuxième axe de pivotement (7) et reliant le bras presseur (5) au support de soc (2) est prévue, notamment avant la fixation à ressort (8) dans la direction de conduite F.

3. Soc de semoir selon une des revendications précédentes, dans lequel sur le support de soc (2) une butée de pression (11), notamment ajustable, afin de limiter un mouvement de pivotement des galets presseurs (4) dans la direction du sol (60) est prévue.

4. Soc de semoir selon une des revendications précédentes, dans lequel la suspension (40) est conçue comme un ressort de traction, notamment un ressort en spirale (41).

5. Soc de semoir selon une des revendications précédentes, dans lequel la suspension (40) s'étend en dessous du premiers et du second axe de pivotement (6,7).

6. Soc de semoir selon une des revendications précédentes, dans lequel des moyens de limitation, notamment la butée de pression (11), sont disposés derrière le deuxième axe de pivotement (7) dans la direction de conduite F, notamment formé par :
- une, de préférence deux plaque(s) d'ajustement (13,14) correspondantes avec une pluralité de réceptacles d'ajustement (15) et
- un élément de butée (12) fixable dans les réceptacles d'ajustement (15).

7. Soc de semoir selon une des revendications précédentes, dans lequel le bras presseur (5) peut être arrêté par rapport au support de soc (2), notamment par les moyens de limitation, de préférence la butée de pression (11).

8. Semoir comportant un châssis de semoir avec au moins un soc de semoir (1) selon une des revendications précédentes et comportant un support à ressort (50) ainsi qu'une suspension (40) agissant entre le bras presseur (5) et le support à ressort (50).
